# EUROPEAN PATENT APPLICATION

(11) **EP 4 438 226 A1**
(43) Date of publication of application: **02.10.2024**
(21) Application number: 24164664.5
(22) Date of filing: 19.03.2024
(51) Int. Cl.: B23Q 5/00, F15B 13/08, B27M 1/08, F16K 27/00, F15B 13/00

(54) **DISTRIBUTION UNIT AND ASSOCIATED MACHINING CENTER**

(30) Priority: 28.03.2023 IT 202300005943
(71) Applicant: SCM Group S.p.A., 47921 Rimini (RN) (IT)
(72) Inventor: VANNUCCI, Carlo, 47921 RIMINI (RN) (IT); AMADORI, Davide, 47921 RIMINI (RN) (IT)
(74) Representative: Tiburzi, Andrea

(57) **Abstract**

The present invention relates to a distribution unit (1) for pneumatic elements, comprising: one or more sections (S1-S6), each section comprising: a first fluid inlet (122) and a second fluid inlet (124); a plurality of fluid outlets (1261, 1262, 1271-1276); and a fluidic channel extending from said first fluid inlet (122) to said second fluid inlet (124), said fluidic channel (128) being fluidically connected to said plurality of fluid outlets (1261, 1262, 1271-1276); and wherein the distribution unit (1) comprises at least one separator element (11), said separator element (11) being movable between a rest position and an active position wherein said at least one separator element (11) interrupts said fluidic channel (128) separating at least one of said plurality of fluid outlets (1261, 1262, 1271-1276) from a respective one of said first inlet (122) or said second fluid inlet (124).

## Description

The present invention relates to a distribution unit and associated machining center.

More in detail, the invention concerns a distribution unit for distributing an operating fluid, such as for example a gas or a pressurized liquid, to a plurality of pneumatic components/elements, or pneumatic members/parts, associated with a planar machining center equipped with bars.

Hereinafter, the description will be directed in particular to a distribution unit for pneumatic elements of a machining center for machining wooden workpieces, but it is well evident that the invention should not be considered limited to this specific use or the particular machining center disclosed herein.

### Background

Machining centers for machining wood are well known and include a worktop on which the wooden workpieces to be machined can be arranged and fixed, and a gantry (or carriage) movable with respect to the worktop, on which an operator group comprising suitable means for machining wooded workpieces is installed.

The movable gantry provides the operator group itself with the degrees of freedom of translation necessary to perform machining of the workpieces.

The worktop comprises a plurality of sliding bars arranged parallel to one another. The bars are organized in sets of one or more bars, for example a set of loading bars on which the workpiece can be arranged and a set of machining bars, on which the workpiece has already been arranged and can be machined.

Thus, while the machining of the workpiece disposed on the set of machining bars is performed, the operator may load a further workpiece on the set of loading bars, enabling the so-called "pendulum machining" of the workpieces.

The bars comprise, in turn, bases on each of which there may be installed pneumatic elements such as, for example, members for fixing or supporting the workpieces, such as suction cups, clamps, pliers or the like.

As well known, said pneumatic elements of the respective sets of bars are operated through the use of a distribution unit that allows distribution of an operating fluid to them. The fluid may be distributed at positive pressure or negative pressure creating a vacuum, and may include a gas, such as, for example, air, or a liquid, such as oil.

Conventionally, the distribution unit comprises a body that includes a fixed separator element, which is integral with the body of the distribution unit, and at least a first section and a second section fluidically separated by means of said fixed separator element. Each section comprises a fluidic channel fluidically connected to a respective inlet of the fluid and a plurality of outlets of the fluid for distributing the fluid to said pneumatic elements, or pneumatic parts, associated with a respective set of bars.

Therefore, the pneumatic elements of the set of machining bars may be fed by the plurality of fluid outlets of the first section and the pneumatic elements of the set of loading bars may be fed by the plurality of fluid outlets of the second section, or vice versa.

Although the separation between the sections allows the so-called "pendulum machining", this separation is rigid and does not allow to use a different number of bars (to which the corresponding fluid outlets are associated). For example, considering that both the first section and the second section of the distribution unit respectively comprises 4 outlets of the fluid, the distribution unit may feed only 4 loading bars and only 4 machining bars. Such rigid separation does not allow pendulum machining in case of workpieces of larger size, which require more bars, along with smaller pieces that require a lower number of sliding bars.

A first problem encountered in the previously described distribution unit is that it is not possible to obtain a dynamic separation of the sections so as to increase or reduce the number of fluid outlets associated with a respective section of the distribution unit, thus allowing to associate more or less bars with the respective sets of machining bars and loading bars.

Although dynamic separation can be achieved by independent feeding of each of the respective outlets, for example by using a respective electrovalve for each outlet of the fluid, such a configuration is not optimal both in terms of costs and in terms of complexity and size.

It is therefore desirable to improve the distribution unit in order to achieve optimal dynamic separation of the sections, thus allowing for greater flexibility in machining workpieces of different sizes.

### Object of the invention

The object of the present invention is to overcome said disadvantages by providing a distribution unit for pneumatic elements that allows a dynamic separation of the sections, therefore allowing to associate more or less bars with the respective sets of machining bars and loading bars.

Therefore, the subject of the invention is a distribution unit as claimed in claim 1 and a machining center as claimed in claim 15.

Further preferred embodiments are described in the dependent claims.

### List of the attached figures

The present invention will now be described, for illustrative but not limitative purposes, according to an embodiment thereof, with particular reference to the accompanying figures, in which:
FIG. 1 shows a perspective view of a machining center comprising a worktop and a plurality of bars arranged parallel to one another on said worktop;
FIG. 2 shows a perspective view of a distribution unit for pneumatic elements, according to the prior art.
FIG. 3 shows a front cross section in the XY plane of a distribution unit for pneumatic elements shown in FIG. 2.
FIG. 4 shows a perspective view of a distribution unit for pneumatic elements, according to an embodiment of the present invention.
FIG. 5 shows a front cross section in the XY plane of a distribution unit for pneumatic elements shown in FIG. 4.
FIG. 6 shows a detail of the front section shown in FIG. 4.

### Detailed description of the invention

In the various figures, similar parts will be indicated by the same reference numerals.

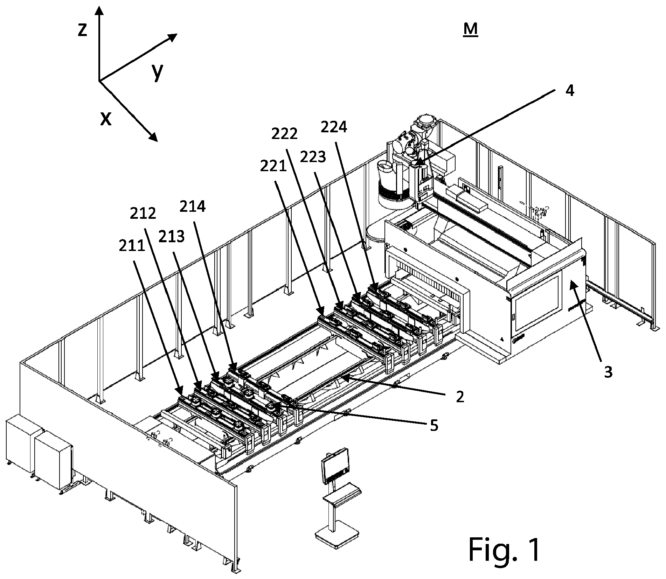

Referring to FIG. 1 it is shown a perspective view of a machining center M for machining workpieces, such as pieces made of wood, plastic or other material.

The machining center M comprises a worktop 2 and a movable gantry (or carriage) 3 with respect to the worktop 2, on which an operator group 4 is installed comprising suitable means for machining the workpieces.

The worktop 2 in turn comprises a first set of bars 211 -214 and a second set of bars 221 -224 arranged parallel to each other on said worktop 2. The respective sets can comprise one or more bars. For example, the first set of bars may include a set of loading bars on which it is possible to arrange the workpiece and the second set of bars may include a set of machining bars, on which a workpiece has already been arranged and may be machined.

Therefore, while machining of a workpiece is performed on the set of machining bars, the operator can load a further workpiece on the set of loading bars. This use of sets of bars allows the so-called "pendulum machining" of the workpieces, but it is well evident how the invention is not to be considered limited to this specific type of machining. For example, the machining center M may comprise a single set of bars, rather than separate sets, which may be fed by an operating fluid as will be described below.

The bars may in turn comprise bases 5 on each of which there may be installed pneumatic elements such as, for example, members for fixing or supporting the workpieces, such as suction cups, clamps, pliers or the like. The bases 5 can be slidably coupled to said bars either in a removable manner, or in a non-removable manner. The bases may be movable along the bars 211 -214, 221-224 so as to be arranged according to the size of the workpiece. The movement of the bases 5 can be carried out by appropriate moving means, for example by a manual or automated mechanical movement system.

The machining center M further comprises a distribution unit 1 (not visible in FIG. 1), one or more electrovalves for supplying said distribution unit 1 with an operating fluid and a logic control unit configured to control the operation of said one or more electrovalves (also not visible in FIG. 1).

The distribution unit 1, object of the present invention, allows to distribute the operating fluid to the respective pneumatic elements associated with said first set of bars 211 -214 and/or said second set of bars 221-224.

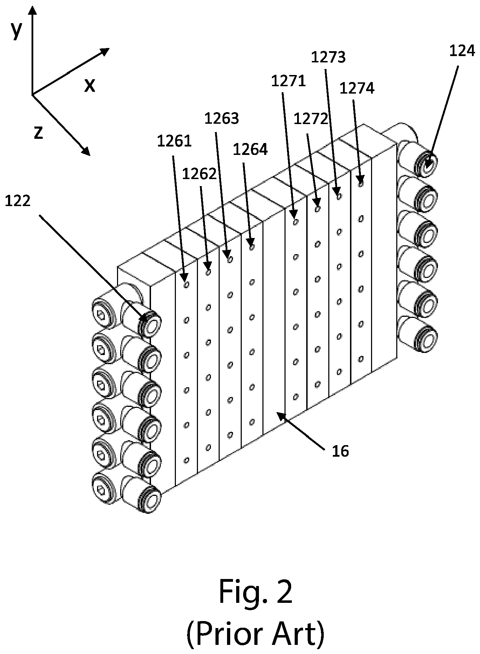

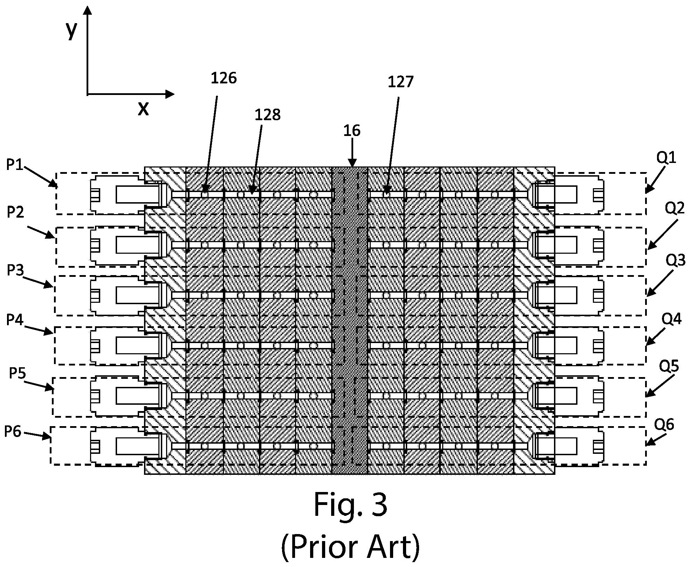

Referring to FIGS. 2 and 3, a distribution unit for pneumatic elements will be described according to the prior art. In particular, FIG. 2 shows a perspective view of the distribution unit, whereas FIG. 3 shows a front cross section for pneumatic elements, according to the prior art.

As shown in FIG. 3, the distribution unit comprises a body that includes a fixed separator element 16 and a plurality of sections P1-P6, Q1-Q6 organized into two sets which are separated from the fixed separator element 16. Each section comprises a respective fluidic channel 128 fluidically connected to a respective inlet 122, 124 of the fluid and a corresponding plurality of outlets 1261, 1264, 1271-1274 of the fluid. This distribution unit allows the distribution of the fluid to said pneumatic elements, or pneumatic parts, associated with a respective set of bars 211-214, 221 - 224 but does not allow a dynamic separation of the sections/sets. Therefore, using the feeding unit shown in FIGS. 2 and 3 it is not possible to associate more or less bars to the respective sets of machining bars and loading bars, without replacing the distribution unit with a distribution unit having a different configuration. In particular, the pneumatic elements of the set of loading bars 211 -214 shown in FIG. 1 can only be fed by the plurality of outlets 1261-1264 of the first section P1 and the pneumatic elements of the set of machining bars 1271-1274 can only be fed by the plurality of fluid outlets of the second section Q1, or vice versa.

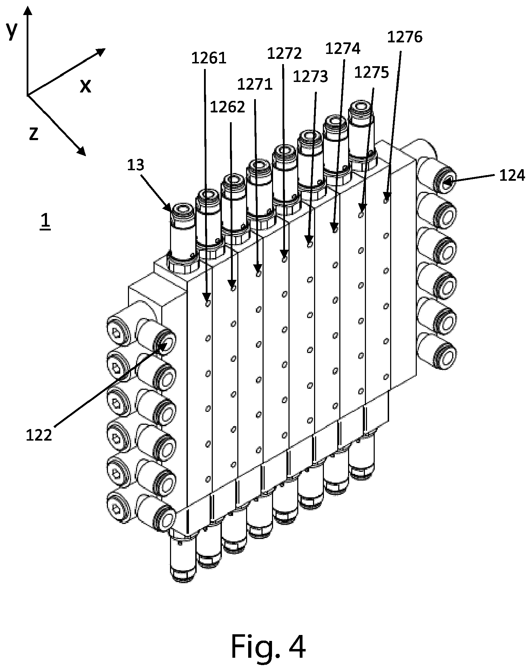

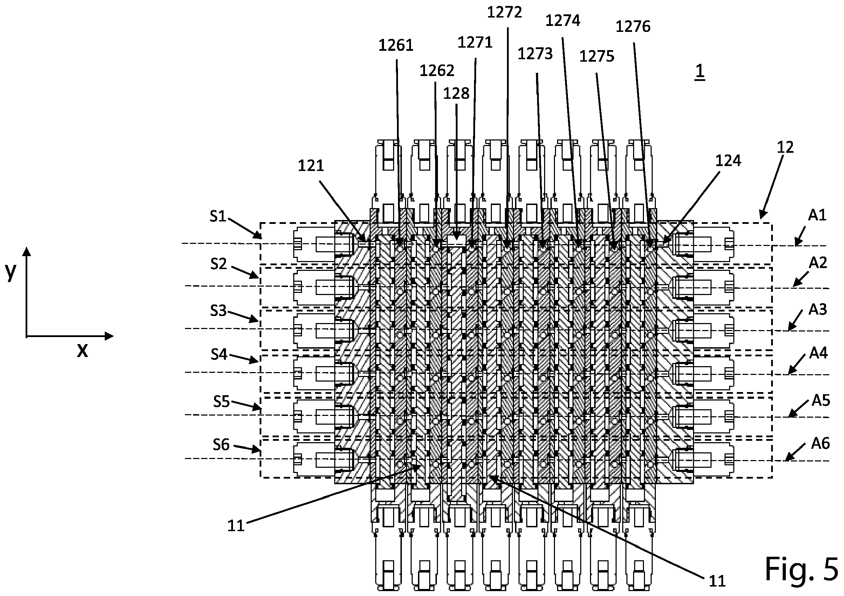

Referring to FIGS. 4 and 5, a perspective view of a distribution unit 1 for pneumatic elements and a front section of the distribution unit 1 is respectively shown, according to an embodiment of the present invention.

The distribution unit 1 allows the distribution of an operating fluid for pneumatic elements. The fluid may be distributed at positive pressure, or negative pressure creating a vacuum, and may include a gas, such as, for example, air, or a liquid, such as oil.

The distribution unit 1 comprises one or more sections S1-S6. Each section includes a first fluid inlet 122, a second fluid inlet 124, a plurality of fluid outlets 1261, 1262, 1271-1276 and a respective fluidic channel extending from said first fluid inlet 122 to said second fluid inlet 124.

As shown in FIG. 5, the fluidic channel 128 is fluidically connected to said plurality of outlets 1261, 1262, 1271-1276.

The plurality of fluid outlets 1261, 1262, 1271-1276 may comprise a first set of outlets 1261, 1262 and a second set of outlets 1271-1276 that can be fluidically separated from said first set of outlets 1261, 1262. For example, as shown in FIG. 4, the first set of outlets 1261, 1262 comprises 2 outlets while the second set of outlets 1271-1276 includes 6 outlets. It is well evident that such sets may be formed so as to comprise a different number of outlets, more generally said first set of outlets 1261, 1262 or said second set of outlets 1271 -1276 may comprise one or more outlets.

As shown in FIG. 5, each of said one or more sections S1-S6 may develop along a respective development axis A1-A6 parallel to the remaining axes of development A1-A6 of the remaining sections S1-S6.

The distribution unit 1 further comprises at least one separator element 11. The separator element 11 can be arranged at least partially inside said fluidic channel 128 and can extend through said one or more sections S1-S6, for example transversally with respect to the development axis A1-A6. Said at least one separator element 11 may be configured to simultaneously interrupt said fluidic channel 128 for each of said one or more sections S1-S6 when said at least one separator element 11 is arranged in said active position. The distribution unit 1 may comprise a plurality of separator elements, for example, as shown in FIGS. 4 and 5 comprises 8 separator elements 11 extending through the plurality of sections S1-S6.

The separator element 11 is configured to be movable between a rest position and an active position in which said at least one separator element 11 interrupts the fluidic channel 128 separating at least one of said plurality of fluid outlets 1261, 1262, 1271-1276 from a respective one of said first inlet 122 or said second fluid inlet 124.

For example, when said at least one separator element 11 is arranged in the active position, said first set of outlets 1261, 1262 is fluidically connected to said first fluid inlet 122, said second set of outlets 1271-1276 is fluidically connected to said second fluid inlet 124, and said first set of outlets 1261, 1262 is fluidically separated from said second set of outlets 1271-1276. Thus, the first set of outlets 1261, 1262 can be fluidically connected to the first set of bars 211-214 while the second set of outlets 1271-1276 can be fluidically connected to said second set of bars 211-214 so as to fed the respective pneumatic elements associated with them.

In a further example, if the machining center M comprises a single set of bars, rather than separate sets as shown in FIG. 1, the first separator element 11 (on the left in FIG. 5) may be arranged in the active position, separating all the fluid outlets 1261, 1262, 1271-1276 from the inlet 122 so as to feed a single set composed of 8 bars. Therefore, a section of the distribution unit 1 can have zero outlets, for example, when the first separator element 11 is arranged in the active position.

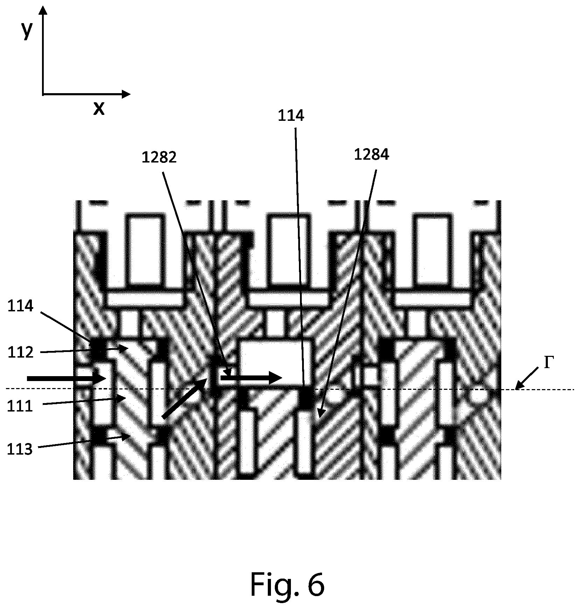

The separator element 11 may be of an arbitrary form, for example it may have a flat or cylindrical shape or a prismatic shape or a polygonal or multilobate shape. The separator element 11 may be configured to be slidable in an axial direction, along the development axis thereof, between said rest position and said active position and may comprise one or more seals 114, as will be described hereinafter with reference to FIG. 6.

FIG. 6 shows a detail of FIG. 4, in which details of the separator elements 11 and of a portion of the fluidic channel 128 are visible.

The portion of the fluidic channel 128 comprises a respective fluid inlet 1282 and a respective outlet 1284 of the fluid fluidically connected to said inlet 1282. From the figure it can be seen that said inlet 1282 and said outlet 1284 are respectively arranged in opposite sections of said portion of said fluidic channel 128, which are defined with respect to an axial plane Γ passing through a longitudinal development axis of the portion of the fluidic channel.

With reference to the separator elements, each one of them comprises an elongated body comprising one or more sections which in turn comprise a central stem 111, a first end 112 and a second end 113 opposite to said first end 112. On each of said ends 112, 113 a respective seal 114 can be arranged, integral with the separator element 11 and configured to define a side wall of a portion of said fluidic channel 128. The seals define movable walls with respect to the body of the distribution unit 1, which movement allows to open or close the fluidic connection between said inlet 1282 and said outlet 1284.

As shown in FIG. 6 with reference to the central separator element 11, when said at least one separator element 11 is arranged in said active position, said seal 114 is arranged in said portion of the fluidic channel 128, for example close to the axial extension axis of the fluidic channel 128 portion, so as to interrupt the fluidic connection between said inlet 1282 and said outlet 1284, separating them.

The separator element 11 can be actuated by a respective actuator element 13, which can be operatively coupled to a corresponding one of said at least one separator element 11 and be configured to move said corresponding separator element 11 between said rest position and said active position.

The actuator element 13 can comprise a magnetic or pneumatic or hydraulic actuator, for example a hydraulic piston or an electric motor or the like.

Advantageously, by means of the distribution unit for pneumatic elements, object of the invention it is possible to facilitate the so-called "pendulum machining" by the dynamic separation of the sections of the distribution unit, therefore allowing to associate more or fewer bars of a machining center to the respective sets of machining bars and loading bars.

A second advantage is given by the fact that, the distribution unit for pneumatic elements, object of the present invention, allows an optimal separation of the respective sections both in terms of costs and in terms of complexity and size.

A third advantage is that with the distribution unit, object of the invention, it is possible to obtain greater flexibility in grouping/forming the respective sets of bars during the machining of the workpieces in a simple manner, thus avoiding times of inactivity of the machining center, and related costs, caused by the replacement of conventional distribution units in order to adapt the machining center to the specific dimensions of the workpieces.

The present invention has been described for illustrative but not limitative purposes, according to its preferred embodiments, but it is to be understood that variations and/or modifications may be made by those skilled in the art without departing from the relative scope of protection, as defined by the appended claims.

## Claims

1. Distribution unit (1) for pneumatic elements, comprising:
one or more sections (S1-S6), each section comprising:
a first fluid inlet (122) and a second fluid inlet (124);
a plurality of fluid outlets (1261, 1262, 1271-1276); and
a fluidic channel extending from said first fluid inlet (122) to said second fluid inlet (124), said fluidic channel (128) being fluidically connected to said plurality of fluid outlets (1261, 1262, 1271-1276); and
at least one separator element (11), said separator element (11), being movable between a rest position and an active position wherein said at least one separator element (11) interrupts said fluidic channel (128) separating at least one of said plurality of fluid outlets (1261, 1262, 1271-1276) from a respective one between said first inlet (122) or said second fluid inlet (124).

2. Distribution unit (1) according to claim 1 wherein said plurality of fluid outlets (1261, 1262, 1271-1276) comprise a first set of outlets (1261, 1262) and a second set of outlets (1271-1276), and wherein said first set of outlets (1261, 1262) or said second set of outlets (1271-1276) includes one or more outlets.

3. Distribution unit (1) according to claim 2, wherein when said at least one separator element (11) is arranged in said active position, said first set of outlets (1261, 1262) is fluidically connected said first fluid inlet (122), said second set of outlets (1271-1276) is fluidically connected to said second fluid inlet (124), and said first set of outlets (1261, 1262) is fluidically separated from said second set of outlets (1271-1276).

4. Distribution unit (1) according to any one of the preceding claims wherein said at least one separator element (11) is arranged at least partially within said fluidic channel (128).

5. Distribution unit (1) according to any one of the preceding claims wherein said at least one separator element (11) is extended through said one or more sections (S1-S6).

6. Distribution unit (1) according to any one of the preceding claims wherein said separator element (11) is of a planar shape or a cylindrical shape or a prismatic shape or an ellipsoidal shape or a polygonal shape or a multi-lobed shape.

7. Distribution unit (1) according to any one of the preceding claims where said at least one separator element (11) is configured to be slidable in an axial direction between said rest position and said active position.

8. Distribution unit (1) according to any one of the preceding claims wherein said at least one separator element (11) includes one or more seals (114).

9. Distribution unit (1) according to any one of the preceding claims wherein each of said at least one separator element (11) comprises:
an elongated body comprising one or more sections, each section of said elongated body comprising a central stem (111), a first end (112) and a second end (113) opposite said first end (112), each of said ends (112, 113) comprising a respective seal (114) configured to define a side wall of a portion of said fluidic channel (128).

10. Distribution unit (1) according to claim 9, wherein said portion of said fluidic channel (128) comprises a respective fluid inlet (1282) and a respective fluid outlet (1284) fluidically connected to said inlet (1282), said inlet (1282) and said outlet (1284) being respectively placed in opposite sections of said portion of that fluidic channel (128), said sections being defined with respect to an axial plane (Γ) of the portion of said fluidic channel.

11. Distribution unit (1) according to claim 10, wherein when said at least one separator (11) is placed in said active position, said seal (114) is arranged in said portion said fluidic channel (128) so as to break the fluidic connection between said inlet (1282) and said outlet (1284).

12. Distribution unit (1) according to any one of the preceding claims comprising at least one actuator element (13), each actuator element being operationally coupled to a corresponding one of said at least one separator element (11) and configured to move said corresponding separator element (11) between said rest position and said active position.

13. Distribution unit (1) according to claim 12 wherein said actuator element (13) comprises an actuator having magnetic or pneumatic or hydraulic or electric activation.

14. Distribution unit (1) according any one of the preceding claims wherein each of said one or more sections (S1-S6) is extended along a respective development axis (A1-A6), said the respective development axis (A1-A6) being parallel to the remaining development axes (A1-A6) of the remaining sections (S1-S6), and wherein said at least one separator element (11) is configured to interrupt simultaneously said fluidic channel (128) for each of said one or more sections (S1-S6) when said at least one separator element (11) is placed in said active position.

15. Machining center (M) comprising
a worktop (2) comprising a first set of bars (211-214) and a second set of bars (221-224) arranged parallel between each other on said worktop (2);
a distribution unit (1) according to any of the above claims to distribute an operating fluid to respective pneumatic elements being associated with said first set of bars (211-214) and/or said second set of bars (221-224);
one or more electrovalves for supplying said distribution unit (1) with said fluid; and
a logic control unit being configured to control the actuation of said one or more electrovalves.
